Europäisches Patentamt

European Patent Office

Office européen des brevets

(19)

(11) Publication number: **0 304 600 B1**

# EUROPEAN PATENT SPECIFICATION

(12)

(45) Date of publication of patent specification: **27.11.91**

(21) Application number: **88111210.6**

(22) Date of filing: **09.04.84**

(51) Int. Cl.⁵: **G06K 9/62**, G06K 9/50

(60) Publication number of the earlier application in accordance with Art.76 EPC: **0 124 789**

(54) **Method of identifying objects.**

(30) Priority: **04.05.83 JP 78792/83**

(43) Date of publication of application:
**01.03.89 Bulletin 89/09**

(45) Publication of the grant of the patent:
**27.11.91 Bulletin 91/48**

(84) Designated Contracting States:
**CH DE FR GB IT LI SE**

(56) References cited:
**US-A- 3 959 771**

(73) Proprietor: **KABUSHIKI KAISHA KOMATSU SEISAKUSHO**
**3-6, Akasaka 2-chome**
**Minato-ku Tokyo 107(JP)**

(72) Inventor: **Watanabe, Yuji**
**5-2-304, Ueno 2-chome**
**Hirakata-shi Osaka-fu(JP)**
Inventor: **Kondo, Toshiaki**
**4-4, Ueno 2-chome**
**Hirakata-shi Osaka-fu(JP)**

(74) Representative: **von Kirschbaum, Albrecht, Dipl.-Ing.**
**Hermann-Ehlers-Strasse 21a**
**W-8034 Germering(DE)**

## Description

### BACKGROUND OF THE INVENTION

#### 1. Field of Invention

This invention relates to a method of identifying an object capable of identifying rod-like objects to be detected from an image data comprising one picture of a plurality of said objects in various orientations.

#### 2. Description of the Prior Art

According to a prior art method of identifying an object to be detected (hereinafter, merely called an object) the object is photographed with an image pick-up device of an industrial television (ITV) camera for example, the photographed picture is scanned, and a bright and dark pattern (brightness pattern) comprising image data of a predetermined number of picture elements which are contiguous in the direction of scanning is compared with a reference pattern which has been prepared previously and representing the brightness of the object. Such a method is taught by US-A-3 959 771 With this method, however, in spite of the fact that the picture is inputted with multistage tones, the actual processing of the data is made after converting the data into binary codes, such method is practical where electrical component parts can be assembled under satisfactory opitcal environment and high quality binary picture image can be obtained relatively readily. However, any special light source for image pick-up cannot be available so that the object is photographed under the influence of solar light, as the brightness pattern of the object varies greatly, correct identification of the pattern is impossible. Furthermore, background and noise may cause erroneous identification.

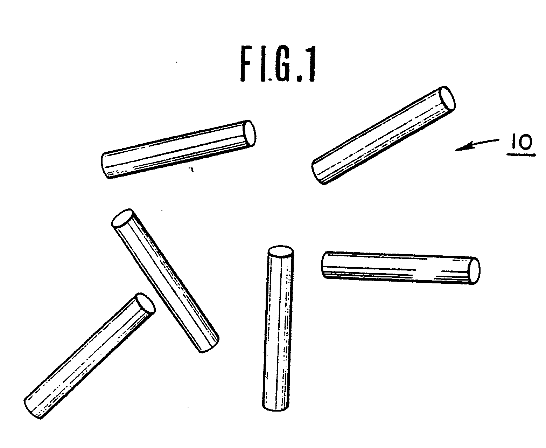

In the method of identifying an object by comparison of patterns, where the objects arranged in a predetermined direction, for example substantially perpendicularly to the direction of scanning, detection is possible, but the objects such as rods or logs 10 are randomly distributed as shown in Fig.1, it has been impossible to detect the object in all directions. Furthermore, as in a factory in which directions of illumination are not uniform so that brightness is influenced by solar light, the brightness pattern in the transverse direction varies according to the direction of the object. For this reason, detection of objects which are randomly directed is very difficult.

### SUMMARY OF THE INVENTION

It is an object of this invention to provide a novel method of identifying rod-like objects capable of correctly identifying a proper object even under an adverse optical environment or in a states in which the objects contact with each other or are distributed randomly.

In view of the above background, it is an object of the present invention to provide a novel method of detecting rod-like objects capable of detecting rod-like objects randomly oriented even under an adverse optical environment.

There is also provided a method of identifying rod-like objects characterized by the steps of sequentially extracting a set of object brightness patterns including a predetermined number picture elements which are contiguous in a predetermined scanning direction, from picture element data in a predetermined field of view in which a plurality of the rod-like objects to be identified are scattered while shifting the brightness patterns by one picture element in the scanning direction; comparing the object brightness patterns with a prepared reference pattern representing brightnesses of a predetermined number of picture elements in a transverse direction of the objects; where the brightness pattern in the transverse direction of the objects varies in accordance with the orientations of the objects, preparing reference brightness patterns in the transverse direction of the objects lying substantially perpendicularly to the horizontal, vertical, right $45°$ upper and right $45°$ lower directions in the predetermined field of view, in each of the four directions; extracting object brightness patterns in each of four scanning directions of the horizontal, vertical, right $45°$ upper and right $45°$ lower directions in the field of view, from the picture image data in the predetermined field of view; and utilizing one of the prepared four reference brightness patterns selected in accordance with the direction of scanning of the object brightness pattern [as a reference pattern utilized as a reference] for comparison with the object brightness pattern, thereby identifying randomly oriented scattered rod-like objects.

In the accompanying drawings:

Fig.1,      is a plan view showing rods randomly distributed

Fig.2       is a block diagram showing an electric circuit for forming a reference pattern;

Fig.3       is a graph showing a plurality of brightness patterns and a reference pattern prepared therefrom;

Fig.4       is a diagrammatic representaion of four rods respectively extending in directions orthogonal to four directions of scanning and one example of directions of illumination for these logs;

Fig.5a - 5d     are graphs showing one example of reference patterns prepared for respective rods 10a - 10d shown in Fig.4;

Fig.6     is a flow chart showing one example of the steps of the method of identifying objects by using the four reference patterns described above;

A method of preparing the reference pattern and a method of extracting the brightness pattern will now be described. According to this invention, four reference patterns are prepared and a reference pattern corresponding to the direction of extraction of the brightness pattern (scanning direction) is used.

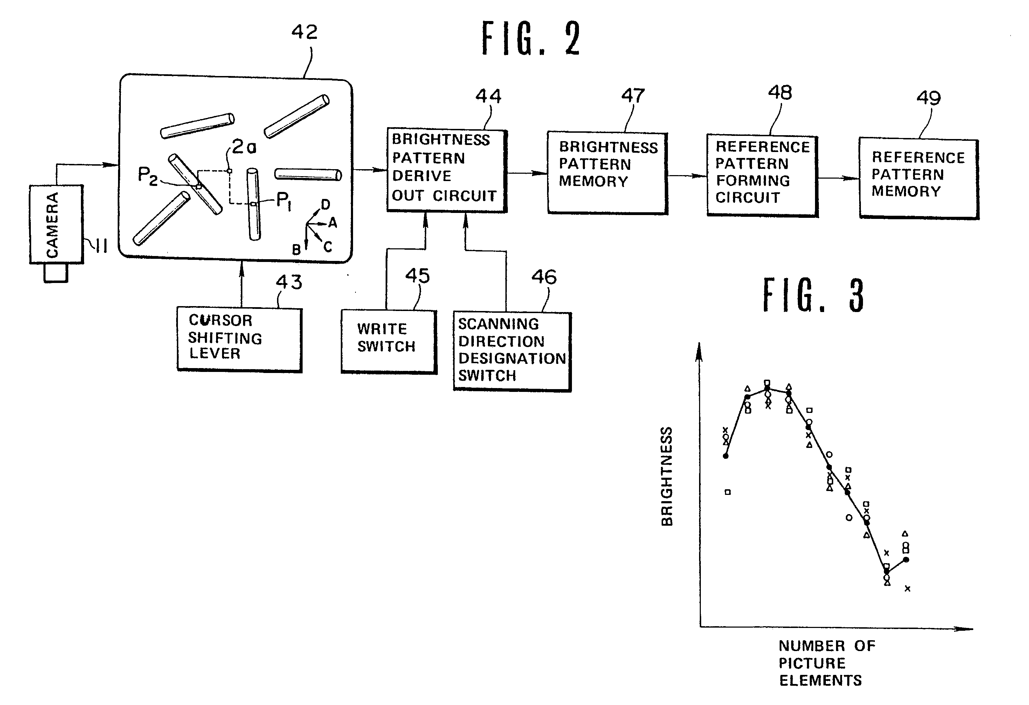

In Fig.2, when the ITV camera 11 photographs rods 10 scattering on the floor of a factory, a monitor 42 displays a picture of the plurality of rods in response to the image data sent from the ITV camera 11. Further, the monitor 42 displays a cursor 2a freee to move in the vertical and horizontal directions of the monitor picture by the manipulation of a cursor shifting lever 43.

A brightness pattern derive out circuit 44 is provided for deriving out a brightness pattern comprising the picture image data comprising ten contiguous picture elements from the image data inputted to the monitor 42. More particularly, the derive out circuit 44 derives out a brightness pattern in a scanning direction designated by a scanning direction designation switch taking the shifted position of the cursor 2a as a reference when a write switch 45 is closed. The scanning direction designation switch 46 is constructed to designate either one of the horizontal direction (shown by arrow A), the vertical direction (shown by arrow B), right 45° upper direction (shown by arrow C) and right 45° lower direction (shown by arrow D).

A brightness pattern memory device 47 temporarily stores a plurality of brightness patterns derived out by the brightness pattern derive out circuit 44, while a reference pattern forming circuit 48 forms an optimum reference pattern from the plurality of brightness patterns. As the method of forming the reference pattern from the plurality of brightness patterns, may be used a method using. Lagrage's method of indefinite multipliers or a method for obtaining an average value or a center value.

The reference pattern prepared in this manner is stored in a memory area of the reference pattern memory device 49 corresponding to the direction of scanning designated by the scanning direction designation switch 46.

To prepare the reference pattern, either one of the four scanning directions, for example, the horizontal direction shown by arrow A is selected by operating the scanning direction designation switch 46. While viewing the picture on the monitor 42, the operator searches a picture image of the rod in a direction substantially perpendicular to the direction A and then manipulates the cursor shifting lever 43 to shift the cursor to the central position $P_1$ of the picture. Thereafter, the operator turns ON the write switch 45. By repeating many times the operation described above, a plurality of sets of the brightness patterns in the transverse direction of the rod substantially perpendicular to the direction A would be stored in the brightness pattern memory device 47, and the reference pattern is formed by the reference pattern forming circuit 48 based on the plurality of sets of the brightness patterns. Fig.3 shows the relationship among 4 sets of brightness patterns shown by symbols (□, ○, △ and x and the reference pattern (•) prepared from these brightness patterns.

Where direction D is designated as the scanning direction, a reference pattern in this scanning direction can be prepared by shifting the cursor 2a to the center position $P_2$ of the rod perpendicular to the designated direction.

As above described, the reference pattern memory device 49 stores four reference patterns corresponding to the four scanning directions.

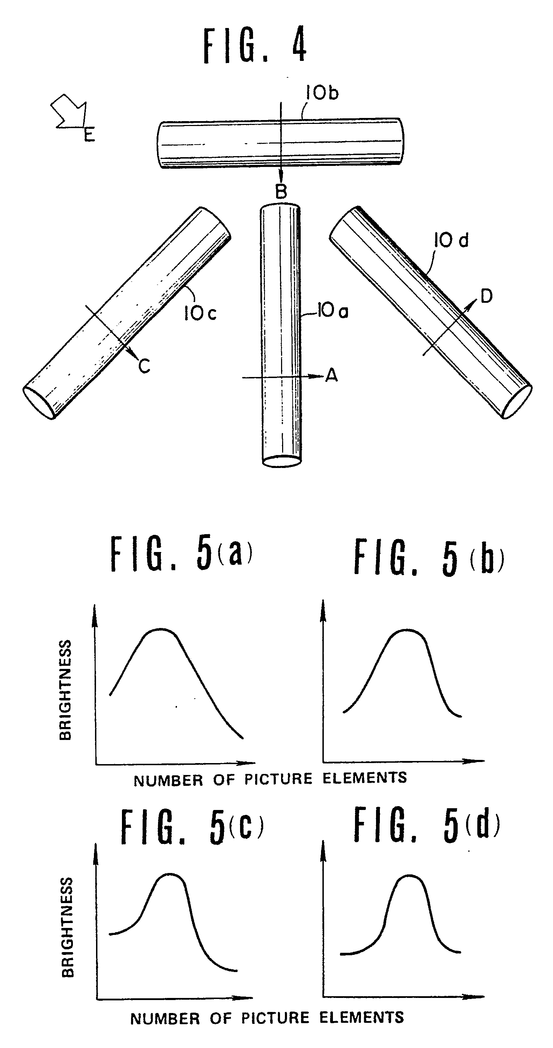

Where rods 10a, 10b, 10c and 10d present respectively in the orthogonal directions A, B, C and D as shown in Fig.4, and when the rods are illuminated in the direction of arrow E, the reference patterns formed for rods 10a, 10b, 10c and 10d would have different patterns as shown in Figs. 5a - 5d.

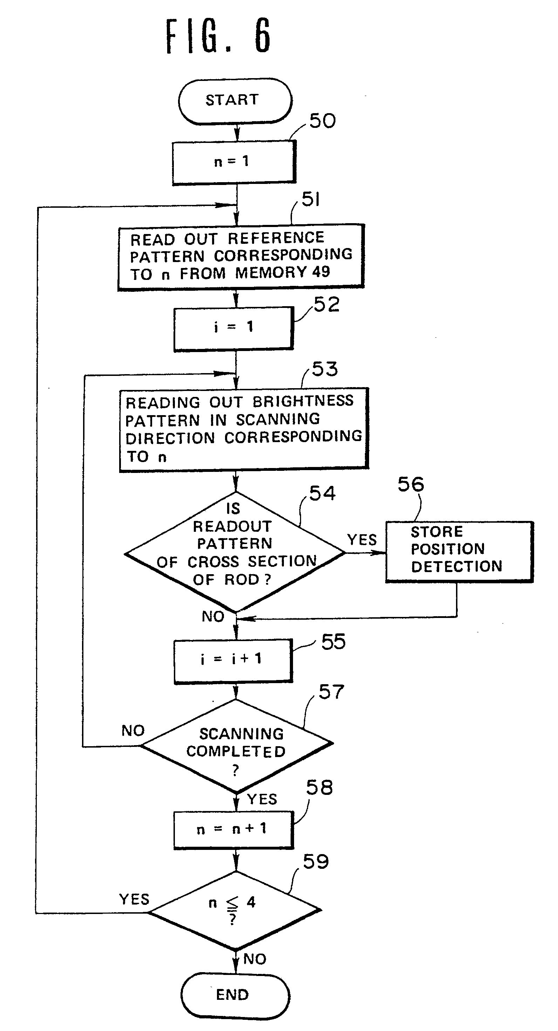

One example of the method of identifying an object by using the four reference patterns will be described in the following with reference to a flow chart shown in Fig.6. At step 50 it is made n = 1 to designate the scanning direction of the picture image data of one picture. Then at step 51 a reference pattern corresponding to n is read out from the reference pattern memory device 49. As above described, the reference pattern memory device 49 is constructed to store reference patterns in the four scanning directions so that the reference patterns can be read out according to the value of n.

Then at step 52 it is made i = 1 for designating the position of one end of the scanning direction corresponding to n. At step 53, the brightness pattern of data of a predetermined number of elements which are contigous in the scanning direction which corresponds to n are read out from the picture image data of one picture corresponding to the position of i. At step 54, the brightness pattern is compared with the read out reference pattern to judge whether the read out brightness pattern is the brightness pattern of the cross-section of the rod or not. When the result of judgment is NO, at step 55 the position of the rod is detected based on the position of i when the brightness pattern is that of the cross-section and to store this position. When the result of judgment at step 54 is YES, the programm is transferred to step 56 to store position detection. At step 55, 1 is added to i, and at step 57 a judgment is made as to whether the position of i is the scanning completion position or not. If the result of this judgment is NO, the program is returned to step 53 at which a new brightness pattern displaced by one picture element in the scanning direction corresponding to n is read out. By executing the processings and judgments until completion of a scanning, it is possible to detect and store the cross-sectional position of a rod presenting within ±22.5° about a direction orthogonal to the direction of scanning corresponding to n. When the position is the scanning completion position, 1 is added to n to designates another scanning position at step 58.

At step 59, a judgment is made as to whether the detection of rods in each of the four scanning directions has been executed or not. When n is less than 4, the program is returned to step 51. At this time, at step 51, a new reference pattern is read out from the reference memory device corresponding to the renewed value of n. Thereafter, the scanning is made in a scanning direction corresponding to n by using the read out reference pattern for detecting the cross-sectional position of the rod in the same manner as above described. When detection of the rod in each of the four scanning directions completes, n becomes 5 thus ending the direction of rods of one picture.

As above described, presence or absence (cross-sectional position) of a plurality of rods scattered in all directions can be detected. Further, the information of the position of the rod detected in such way is applied to a handling robbot, for example, so that it is used when the robbot correctly grasps the rod.

Furthermore, in this embodiment, rods were used as the objects to be detected, however, this invention can be applied to other rod-like objects with cross-sectional configuration, for example, a hexagonal cross-section.

As described, since according to this invention, the rod-like object is scanned in four discrete directions so as to use an optimum reference pattern for each scanning direction, it is possible to accurately detect objects scattered in all orientations irrespective of the position of the source of illumination.

## Claims

1. A method of identifying rod-like objects comprising the steps of:

sequentially extracting a set of object brightness patterns each pattern including a predetermined number of picture elements which are contiguous in a predetermined scanning direction, from picture element data in a predetermined field of view in which a plurality of the rod-like objects to be identified are scattered, while shifting successive said brightness patterns by one picture element in said scanning direction;

comparing said object brightness patterns with a prepared reference pattern representing brightnesses of a predetermined number of picture elements in a transverse direction of said objects;

where the brightness pattern in the transverse direction of said objects varies in accordance with orientations of said objects, preparing reference brightness patterns in the transverse direction of said objects lying substantially perpendicularly to the horizontal, vertical, right 45° upper and right 45° lower directions in said predetermined field of view, in each of said four directions;

extracting object brightness patterns in each of four scanning directions of said horizontal, vertical, right 45° upper and right 45° lower directions in said field of view, from said picture image data in said predetermined field of view; and

utilizing one of said prepared four reference brightness pattern selected in accordance with the direction of scanning of said object brightness pattern for comparison with said object brightness pattern, thereby identifying randomly oriented scattered rod-like objects.

## Revendications

1. Procédé d'identification d'objets cylindriques comprenant les étapes consistant à :

extraire séquentiellement une série de modèles de brillance d'objets, chaque modèle comprenant un nombre prédéterminé d'éléments d'image qui sont contigüs dans une direction de balayage prédéterminée, à partir de données d'éléments d'image dans un champ prédéterminé de vision dans lequel est disséminée une pluralité d'objets cylindriques à identifier, tout en déplaçant les modèles de brillance successifs d'un élément d'image dans la direction de balayage ;

comparer les modèles de brillance d'objets par rapport à un modèle de référence établi représentant les brillances d'un nombre prédéterminé d'éléments d'image dans une direction transversale des objets ;

le modèle de brillance dans la direction transversale des objets variant en fonction des orientations des objets ;

établir des modèles de référence dans la direction transversale des objets sensiblement situés perpendiculairement aux directions horizontale, verticale, supérieure droite à 45°, inférieure droite à 45° dans le champ de vision prédéterminé, dans chacune des quatre directions ;

extraire les modèles de brillance d'objets dans chacune des quatre directions de balayage parmi les directions horizontale, verticale, supérieure droite à 45° et inférieure droite à 45° dans le champ de vision, à partir des données d'éléments d'image dans le champ de vision prédéterminé ; et

utiliser l'un des quatre modèles de brillance de référence choisi en fonction de la direction de balayage du modèle de brillance d'objets en vue de la comparaison avec le modèle de brillance d'objets, ce qui permet d'identifier des objets cylindriques disséminés et orientés de façon aléatoire.

**Patentansprüche**

**1.** Gegenstandidentifizierungsverfahren zum Identifizieren von stabförmigen Gegenständen, dadurch **gekennzeichnet,**

daß ein Satz von Gegenstands-Helligkeitsmustern, wobei jedes Muster eine vorherbestimmte Anzahl von Bildelementen enthält, welche in einer vorherbestimmten Abtastrichtung aneinanderstoßen, aus Bildelementdaten in einem vorherbestimmten Blickfeld sequentiell extrahiert wird, in welchem eine Anzahl der stabförmigen, zu identifizierenden Gegenstände verstreut sind, wobei die Helligkeitsmuster um ein Bildelement in der Abtastrichtung sukzessiv verschoben werden;

daß die Gegenstands-Helligkeitsmuster mit einem vorbereiteten Referenzmuster verglichen werden, welches Helligkeiten einer vorherbestimmten Anzahl von Bildelementen in einer Querrichtung der Gegenstände darstellt;

daß, wenn sich das Helligkeitsmuster in der Querrichtung der Gegenstände entsprechend Ausrichtungen der Gegenstände ändert, Referenz-Helligkeitsmuster in der Querrichtung der Gegenstände, welche im wesentlichen senkrecht zu der horizontalen, vertikalen, unter 45° nach rechts oben und unter 45° nach rechts unten weisenden Richtung in dem vorherbestimmten Blickfeld liegen, in jeder der vier Richtungen vorbereitet werden;

daß Gegenstands-Helligkeitsmuster in jeder der vier Abtastrichtungen der horizontalen, vertikalen, unter 45° nach rechts oben und unter 45° nach rechts unten weisenden Richtungen in dem Blickfeld, aus den Bildelementdaten in dem vorherbestimmten Blickfeld extrahiert werden, und

daß eines der vorbereiteten vier Referenz-Helligkeitsmuster, welche entsprechend der Abtastrichtung des Gegenstands-Helligkeitsmusters ausgewählt worden sind, für einen Vergleich mit dem Gegenstands-Helligkeitsmuster verwendet wird, um dadurch beliebig ausgerichtete, verstreute, stabförmige Gegenstände zu identifizieren.

# FIG.1

## FIG. 2

- CAMERA (11)
- 42
- 43 CURSOR SHIFTING LEVER
- 2a
- P1
- P2
- A, B, C, D
- 44 BRIGHTNESS PATTERN DERIVE OUT CIRCUIT
- 45 WRITE SWITCH
- 46 SCANNING DIRECTION DESIGNATION SWITCH
- 47 BRIGHTNESS PATTERN MEMORY
- 48 REFERENCE PATTERN FORMING CIRCUIT
- 49 REFERENCE PATTERN MEMORY

## FIG. 3

BRIGHTNESS (vertical axis) versus NUMBER OF PICTURE ELEMENTS (horizontal axis)

7

# FIG. 4

# FIG. 5(a)

BRIGHTNESS

NUMBER OF PICTURE ELEMENTS

# FIG. 5(b)

# FIG. 5(c)

BRIGHTNESS

# FIG. 5(d)

NUMBER OF PICTURE ELEMENTS

# FIG. 6

```
        ┌─────────────┐
        │    START    │
        └──────┬──────┘
               │        ⌐50
        ┌──────▼──────┐
        │    n = 1    │
        └──────┬──────┘
               │              ⌐51
   ┌──►┌───────▼─────────────┐
   │   │ READ OUT REFERENCE  │
   │   │ PATTERN CORRESPONDING│
   │   │ TO n FROM MEMORY 49 │
   │   └───────┬─────────────┘
   │           │         ⌐52
   │   ┌───────▼─────┐
   │   │    i = 1    │
   │   └───────┬─────┘
   │           │                  ⌐53
   │┌─►┌───────▼──────────────┐
   ││  │ READING OUT BRIGHTNESS│
   ││  │ PATTERN IN SCANNING   │
   ││  │ DIRECTION CORRESPONDING│
   ││  │ TO n                  │
   ││  └───────┬───────────────┘
   ││          │      ⌐54            ⌐56
   ││       ◇──▼──────◇   YES  ┌──────────────┐
   ││      < IS READOUT >─────►│    STORE     │
   ││      < PATTERN    >      │  POSITION    │
   ││      < OF CROSS   >      │  DETECTION   │
   ││      < SECTION    >      └──────┬───────┘
   ││      < OF ROD?    >             │
   ││       ◇──┬───────◇             │
   ││          │ NO ◄─────────────────┘
   ││          │         ⌐55
   ││  ┌───────▼─────┐
   ││  │  i = i + 1  │
   ││  └───────┬─────┘
   ││          │         ⌐57
   ││  NO   ◇──▼──────◇
   │└──────< SCANNING  >
   │       < COMPLETED >
   │        ◇──┬───────◇
   │           │ YES       ⌐58
   │   ┌───────▼─────┐
   │   │  n = n + 1  │
   │   └───────┬─────┘
   │           │         ⌐59
   │  YES  ◇───▼────◇
   └───────<  n ≦ 4  >
           <    ?    >
            ◇───┬────◇
                │ NO
        ┌───────▼──────┐
        │     END      │
        └──────────────┘
```